# FASCICULE DE BREVET EUROPEEN

(11) **EP 1 075 386 B1**
(45) Date de publication et mention de la délivrance du brevet: **29.01.2003**
(21) Numéro de dépôt: 99924840.4
(22) Date de dépôt: 29.04.1999
(51) Int. Cl.: B29D 30/54

(54) **ATELIER DE RECHAPAGE DE PNEUMATIQUES**
WERKSTATT ZUM RUNDERNEUERN VON REIFEN
TYRE RETREADING PLANT

(30) Priorité: 05.05.1998 FR 9805994
(43) Date de publication de la demande: 14.02.2001
(73) Titulaire: RECAMIC S.A., 1762 Givisiez (CH)
(72) Inventeur: REPPEL, Emil, Willy, S-311 42 Falkenberg (SE)
(74) Mandataire: Dequire, Philippe Jean-Marie Denis
(86) Numéro de dépôt international: EP9902911
(87) Numéro de publication internationale: WO99056945

(56) Documents cités:
- EP-A- 0 055 237
- EP-A- 0 086 766
- FR-A- 2 354 268
- US-A- 4 490 197

## Description

La présente invention a pour objet un atelier de rechapage de pneumatiques ; elle concerne plus précisément un atelier perfectionné pour effectuer du rechapage en zone non industrielle, par exemple dans les pays en voie de développement. Cet atelier peut être utilisé par un seul opérateur ; il met en oeuvre des machines simples et robustes, en conséquence, les coûts de fabrication, d'entretien et d'utilisation d'un tel atelier simplifié sont particulièrement bas.

Le procédé mis en oeuvre dans l'invention est du type comprenant des postes de déchapage des pneumatiques usés, de râpage de la carcasse, de pose de la nouvelle bande de roulement, de rouletage de celle-ci sur la carcasse, et un autoclave de vulcanisation des pneumatiques pourvus de leur nouvelle bande.

Généralement, les transferts de pneumatiques entre ces différents postes d'une part, puis dans l'autoclave et hors de celui-ci d'autre part, ainsi que les divers stockages intermédiaires, sont effectués par des convoyeurs plus ou moins encombrants et compliqués. Un exemple de ce type d'installation est décrit dans le brevet EP 086 766.

La présente invention vise précisément à simplifier les convoyeurs utilisés jusqu'à ce jour.

Suivant l'invention, un atelier de rechapage comprenant un certain nombre de postes de travail pour préparer les pneumatiques à rechaper, un autoclave à axe horizontal pour vulcaniser les nouvelles bandes de roulement, des premiers moyens pour transférer les pneumatiques entre les différents postes et les stocker et des seconds moyens pour transférer les pneumatiques dans l'autoclave, hors de celui-ci et les stocker, est caractérisé en ce que les premiers et seconds moyens de transfert comportent une structure de transfert et de stockage commune.

De préférence, les premiers moyens de transfert comprenant une première boucle sans fin d'un transporteur monorail et une grue dont la flèche permet d'atteindre tous les postes de travail disposés en cercle autour de la grue, les second moyens de transfert comprenant une seconde boucle sans fin et une branche dudit transporteur monorail, ladite branche pénétrant dans l'autoclave, ainsi qu'une grue, la structure de transfert et de stockage commune est constituée d'une branche commune aux deux boucles sans fin dudit transporteur monorail et de ladite grue.

Avantageusement, les deux boucles sans fin ont une forme allongée pour faciliter les stockages intermédiaires de pneumatiques par lots. Le pied de la grue est préférentiellement monté à l'intérieur de la seconde boucle sans fin du transporteur monorail.

On va décrire en détail un exemple de réalisation de l'invention, donné à titre non limitatif, en se référant au dessin annexé sur lequel :
- la figure 1 est une vue de dessus schématique de l'atelier de rechapage ;
- les figures 2 et 3 sont des vues schématiques en élévation et de côté du même atelier ;
- les figures 4, 5 et 6 sont des vues de dessus simplifiées du même atelier, montrant les transferts des pneumatiques au cours des phases successives ; sur ces figures, on n'a indiqué que les références nécessaires à l'explication de chaque phase d'opérations.

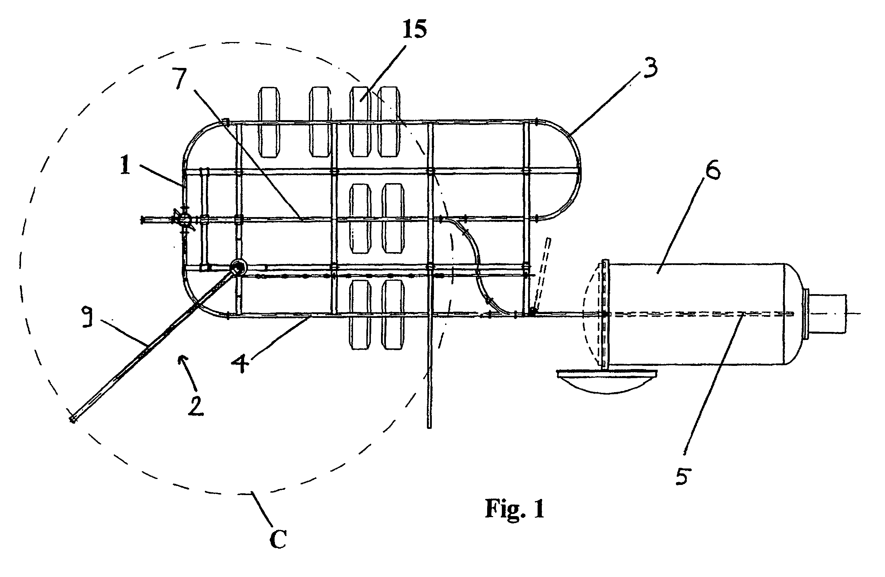

On voit sur la figure 1, de façons schématique, les moyens de transfert d'un atelier de rechapage selon l'invention. Ces moyens de transfert comprennent un transporteur monorail 1 et une seule grue 2. Le transporteur monorail 1 comprend une première boucle sans fin allongée 3 et une seconde boucle sans fin 4 avec une branche rectiligne 5 pénétrant dans l'autoclave 6 à axe horizontal. Ces deux boucles sans fin 3 et 4 ont une branche 7 commune. Le pied 8 de la grue 2 est monté à l'intérieur de la seconde boucle sans fin 4 du transporteur monorail 1.

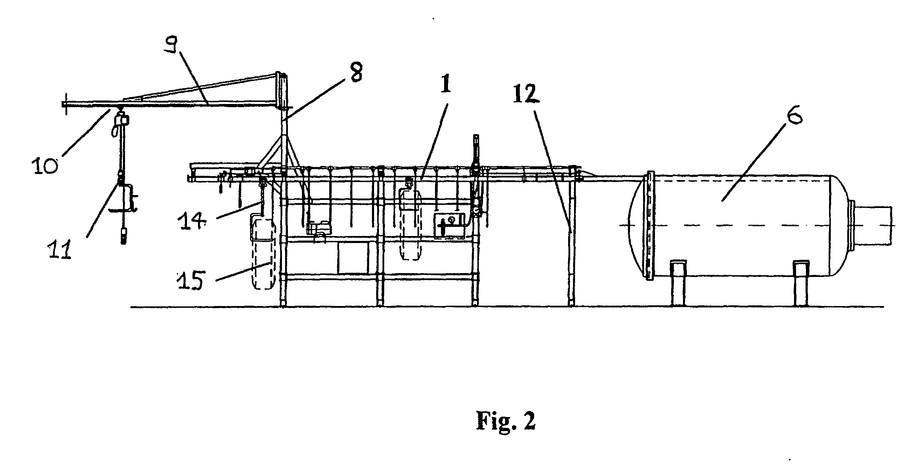

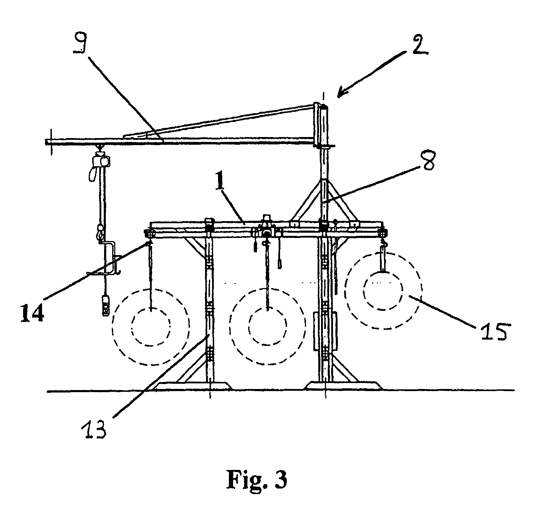

Sur les figures 2 et 3, on voit la grue 2. La flèche 9 de celle-ci, équipée d'un chariot 10 et d'un palan 11, permet - comme on va le décrire plus loin - d'atteindre tous les postes de travail disposés autour de la grue 2 suivant un cercle C (en trait mixte).

De manière connue, le monorail 1 est fixé sur des poteaux rigides, tels que 12 et 13, et il est équipé de potences telles que 14, pour transporter les pneumatiques 15, etc.

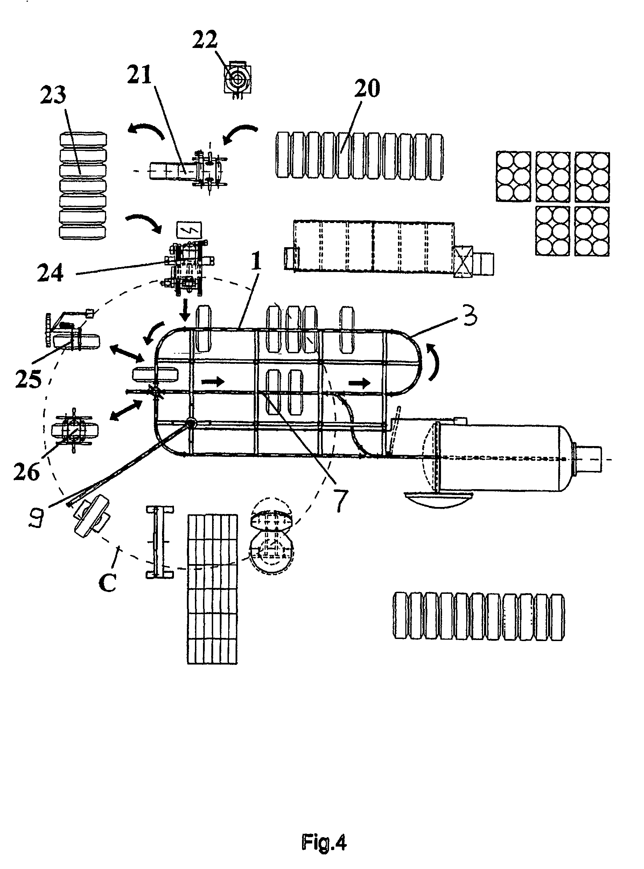

En se référant aux figures 4, 5 et 6, on va maintenant décrire le fonctionnement de cet atelier et préciser le rôle des différents postes.

La figure 4 se rapporte à la phase de réception et de déchapage des pneumatiques usagés à rechaper.

A leur arrivée, les pneumatiques usagés à rechaper sont stockés en 20, puis inspectés en 21 et nettoyés en 22 à l'aide d'un aspirateur ; ils sont alors stockés en 23 avant d'être montés sur la machine de déchapage 24. Avantageusement, cette machine est d'un type qui permet d'effectuer à la fois le déchapage et l'habillage de la nouvelle bande de roulement. Dans ce premier temps, on procède donc à l'enlèvement de la bande de roulement usagée par râpage du sommet du pneumatique à rechaper.

A partir de ce poste, les pneumatiques sont transférés par la grue dont la flèche 8 balaye le cercle C et stockés sous le monorail 1. Le poste 25, qui permet de faire tourner les pneumatiques, facilite les réparations extérieures, par exemple sur une nappe d'armature de sommet ou une blessure au flanc, tandis que le poste 26 est un poste de réparations intérieures. Les pneumatiques ainsi préparés reviennent alors au poste 25 pour leur dissolutionnage avant la pose de la nouvelle bande de roulement, puis ils sont stockés sur la première boucle sans fin 3 du transporteur monorail 1.

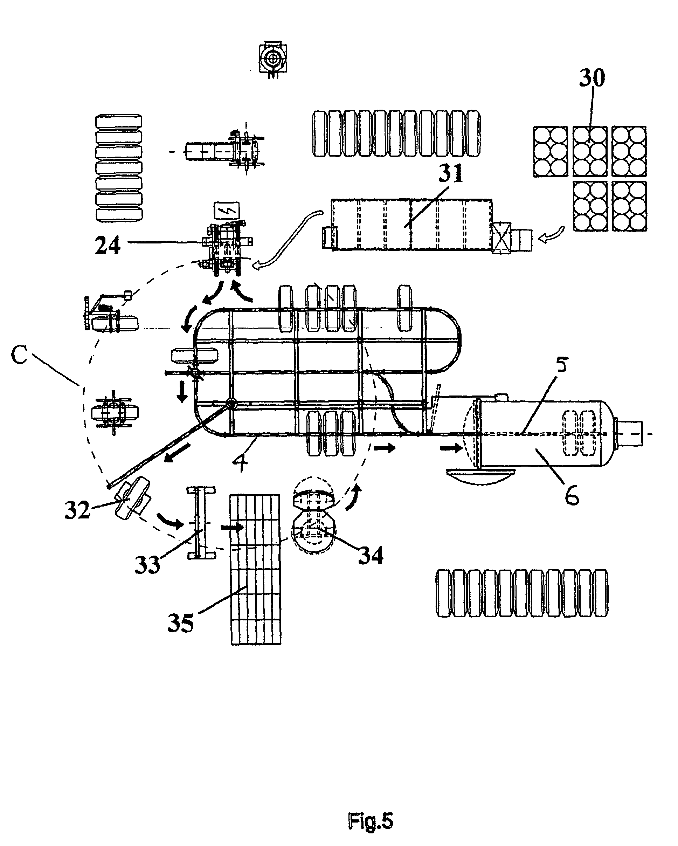

La figure 5 concerne la phase de rechapage proprement dit : les bandes de roulement neuves, stockées en 30, sont amenées en 31 pour être coupées à la longueur voulue et encollées, puis montées sur un pneumatique grâce à la machine 24 déjà mentionnée. Après l'habillage de la nouvelle bande, chaque pneumatique est amené au poste 32 pour la mise en place de la jante de cuisson, et de la membrane de cuisson intérieure, ou d'une chambre intérieure (dans le cas des carcasses textiles) ; au poste 33 les pneumatiques sont insérés dans une enveloppe extérieure par un extenseur. Le poste 34 a pour but de basculer les pneumatiques pour monter l'enveloppe extérieure et aspirer l'air entre le pneumatique et l'enveloppe dans le cas des carcasses radiales ; un tapis de caoutchouc 35 disposé sur le sol protège les membranes de cuisson extérieures de tout risque de crevaison.

Les pneumatiques ainsi préparés sont regroupés sur la branche extérieure de la seconde boucle 4 du transporteur monorail 1 par lots de 5 ou de 10, par exemple, suivant la capacité de l'autoclave 6, dans lequel ils sont alors introduits, guidés sur la branche 5 de la boucle 4 du monorail.

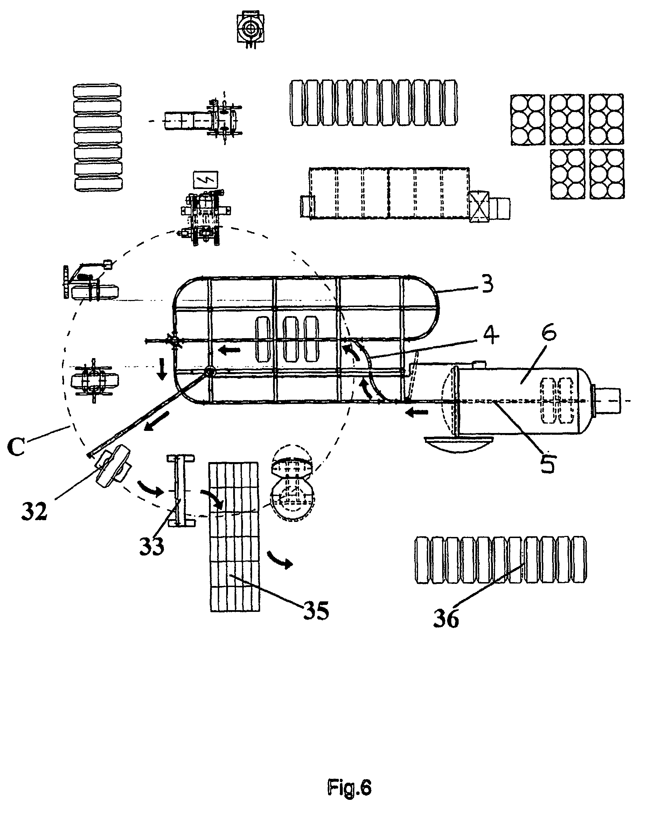

La figure 6 se rapporte à la phase de déchargement des pneumatiques rechapés : après vulcanisation dans l'autoclave 6, les pneumatiques rechapés sont amenés, toujours par lots, de la branche 5 à la branche commune 7 du monorail, pour un nouveau stockage intermédiaire.

De là, ils sont repris au poste 33 pour l'enlèvement de l'enveloppe extérieure. Dans le cas des pneus radiaux, les chambres ou les enveloppes intérieures sont également retirées dans la zone protégée 35.

Enfin, après un dernier contrôle, les pneumatiques rechapés, prêts à être expédiés, sont déchargés et amenés en 36.

On voit que l'invention permet de réaliser une installation très compacte dont tous les coûts sont réduits, et l'emprise au sol minimale.

## Revendications

1. Atelier de rechapage comprenant un certain nombre de postes de travail (24-26, 32-35) pour préparer les pneumatiques (15) à rechaper, un autoclave (6) à axe horizontal pour vulcaniser les nouvelles bandes de roulement, des premiers moyens (1, 2, 3, 7) pour transférer les pneumatiques entre les différents postes (20-36) et les stocker et des seconds moyens (1, 2, 4, 7) pour transférer les pneumatiques dans l'autoclave, hors de celui-ci et les stocker, **caractérisé en ce que** lesdits premiers et seconds moyens de transfert comportent une structure de transfert et de stockage (2, 7) commune.

2. Atelier selon la revendication 1, dans lequel les premiers moyens de transfert comprenant une première boucle sans fin (3) d'un transporteur monorail (1) et une grue (2) dont la flèche (9) permet d'atteindre tous les postes de travail (24-26, 32-35) disposés en cercle autour de la grue (2), les second moyens de transfert comprenant une seconde boucle sans fin (4) et une branche (5) dudit transporteur monorail, ladite branche (5) pénétrant dans l'autoclave (6), ainsi qu'une grue (2), la structure de transfert et de stockage commune est constituée d'une branche (7) commune aux deux boucles sans fin (3-4) dudit transporteur monorail (1) et de ladite grue (2).

3. Atelier de rechapage suivant la revendication 2, dans lequel les deux boucles sans fin (3, 4) ont une forme allongée pour faciliter les stockages intermédiaires de pneumatiques par lots.

4. Atelier de rechapage suivant l'une des revendications 1 à 3, dans lequel le pied (8) de la grue (2) est monté à l'intérieur de la seconde boucle sans fin (4) du transporteur monorail (1).

## Patentansprüche

1. Runderneuerungswerkstatt, die eine bestimmte Anzahl von Arbeitsposten (24-26, 32-35) zur Vorbereitung der rundzuerneuernden Luftreifen (15), einen Autoklaven (6) mit waagrechter Achse zur Vulkanisierung der neuen Laufflächen, erste Mittel (1, 2, 3, 7) für den Transport der Luftreifen zwischen den verschiedenen Arbeitsposten (20-36) und ihre Lagerung, und zweite Mittel (1, 2, 4, 7) für den Transport der Luftreifen in den Autoklaven, aus diesem heraus und ihre Lagerung aufweist, **dadurch gekennzeichnet, daß** die ersten und zweiten Transportmittel eine gemeinsame Transport- und Lagerstruktur (2, 7) aufweisen.

2. Werkstatt nach Anspruch 1, bei der die ersten Transportmittel eine erste Bandschleife (3) einer Fahrschienentransporteinrichtung (1) und einen Kran (2) aufweisen, dessen Ausleger (9) es ermöglicht, alle Arbeitsposten (24-26, 32-35) zu erreichen, die im Kreis um den Kran (2) herum angeordnet sind, die zweiten Transportmittel eine zweite Bandschleife (4) und einen Zweig (5) der Fahrschienentransporteinrichtung, wobei der Zweig (5) in den Autoklaven (6) eindringt, sowie einen Kran (2) aufweisen, die gemeinsame Transport- und Lagerstruktur aus einem den beiden Bandschleifen (3-4) der Fahrschienentransporteinrichtung (1) gemeinsamen Zweig (7) und dem Kran (2) besteht.

3. Runderneuerungswerkstatt nach Anspruch 2, bei der die beiden Bandschleifen (3, 4) eine längliche Form haben, um die satzweisen Zwischenlagerungen von Luftreifen zu erleichtern.

4. Rundemeuerungswerkstatt nach einem der Ansprüche 1 bis 3, bei der der Fuß (8) des Krans (2) innerhalb der zweiten Bandschleife (4) der Fahrschienentransporteinrichtung (1) montiert ist.

## Claims

1. A recapping shop comprising a certain number of work stations (24-26, 32-35) for preparing the tyres (15) to be recapped, an autoclave (6) having a horizontal axis for vulcanising the new treads, first means (1, 2, 3, 7) for transferring the tyres between the various stations (20-36) and for storing them and second means (1, 2, 4, 7) for transferring the tyres into the autoclave, out of it and for storing them, **characterised in that** said first and second transfer means comprise a common transfer and storage structure (2, 7).

2. A shop according to Claim 1, in which the first transfer means comprise a first endless loop (3) of a monorail transporter (1) and a crane (2), the boom (9) of which makes it possible to reach all the work stations (24-26, 32-35) arranged in a circle around the crane (2), the second transfer means comprising a second endless loop (4) and a branch (5) of said monorail transporter, said branch (5) penetrating into the autoclave (6), and also a crane (2), the common transfer and storage structure is formed of a branch (7) common to the two endless loops (3-4) of said monorail transporter (1) and said crane (2).

3. A recapping shop according to Claim 2, in which the two endless loops (3, 4) have an elongated form to facilitate intermediate storage of tyres in batches.

4. A recapping shop according to one of Claims 1 to 3, in which the foot (8) of the crane (2) is mounted inside the second endless loop (4) of the monorail transporter (1).
